# EUROPEAN PATENT SPECIFICATION

(11) **EP 3 564 040 B1**
(45) Date of publication and mention of the grant of the patent: **27.04.2022**
(21) Application number: 18187544.4
(22) Date of filing: 06.08.2018
(51) Int. Cl.: B41M 5/025, B41M 5/035

(54) **STRATIFIED ITEM FOR PRINTING WITH SUBLIMATION INKS AND METHOD FOR PRODUCING IT**
GESCHICHTETE ARTIKEL ZUM DRUCKEN MIT SUBLIMATIONSTINTEN UND VERFAHREN ZUR HERSTELLUNG DAVON
ARTICLE STRATIFIÉ POUR IMPRESSION AVEC DES ENCRES DE SUBLIMATION ET SON PROCÉDÉ DE FABRICATION

(30) Priority: 03.05.2018 IT 201800005034
(43) Date of publication of application: 06.11.2019
(73) Proprietor: SISER S.R.L. (società unipersonale), 36100 Vicenza (VI) (IT)
(72) Inventor: CANACCI, Alessandro, 36043 Camisano Vicentino (VI) (IT); CAZZOLA, Marco, 36030 San Vito di Leguzzano (VI) (IT)
(74) Representative: Ziliotto, Tiziano

(56) References cited:
- EP-A1- 1 710 077
- WO-A1-00/73570
- WO-A1-02/085614
- WO-A2-2007/118083
- JP-A- 2005 199 480
- US-A1- 2004 100 546
- US-B1- 6 638 604

## Description

### TECHNICAL FIELD OF THE INVENTION

The present invention concerns the field of the execution of prints on objects. More specifically, the present invention concerns the decoration of surfaces, for example of fabrics, clothing items and/or accessories, suited to be subjected to heat treatments. In greater detail, the present invention concerns an item provided with a film able to receive sublimation inks for printing objects, such as fabrics in general, with said inks, as well as a method for producing and/or making said item.

### DESCRIPTION OF THE STATE OF THE ART

Several techniques for decorating objects made of fabric in general, such as T-shirts, sweatshirts, hats, shoes, trousers, bags or clothing items and/or similar accessories are known in the art.

The known techniques for decorating fabrics include the most traditional printing techniques, according to which the desired decorations (words, images or the like) are obtained through the direct application of suitable inks to the fabrics themselves, for example using stencil techniques. On the other hand, other techniques developed more recently are equally known, according to which the desired images or decorations are not created directly on the fabrics, but rather on printing supports that are successively applied to the fabrics through the simultaneous application of heat and pressure. These techniques are appreciated also because printing on printing supports is much easier than printing directly on fabric, wherein printing on printing supports means being able to obtain decorations of the most varied types and shapes. In practice, printing supports comprise at least one layer, the so-called finish layer, which is suited to receive inks (more specifically, sublimation inks), and at least one thermo adhesive layer; the desired decoration, in fact, is printed on the finish layer, wherein the support is successively laid on the fabric or clothing item in the desired position and with the thermo adhesive layer in contact with the fabric or clothing item, and applied (fixed) to the latter through the application of heat and pressure, thus making the thermo adhesive layer adhere to the fabric or clothing item. The printing process just described above allows decorations to be applied to fabrics or clothing items in a reliable manner and practically without any risk of undesired detachment.

The printing supports of the known type suited to receive sublimation inks comprise, for example, sublimation papers or polyester flocks or polyester fabrics.

Sublimation papers are printed with sublimation inks and then, through the application of heat, the inks are transferred through sublimation onto the final object, which must be made of a polyester fabric.

Application through heat requires application temperatures exceeding 180°C for more than 15 seconds and the use of a special press.

Polyester flock comprises a layer constituted by polyester fibres with an hairy surface aspect, which is printed with sublimation inks, after which the inks are fixed to the final object through the application of heat.

Application through heat requires, again, application temperatures exceeding 180°C for more than 15 seconds and the use of a special press. The hot transfer process promotes the sublimation of the inks, which are fixed to the polyester fibres.

Polyester fabric comprises a layer consisting of woven polyester fibres, for example warp and weft, with a fibrous surface aspect, which is printed with sublimation inks, after which, through the application of heat, the inks are fixed to the final object.

Application through heat requires, again, application temperatures exceeding 180°C for more than 15 seconds and the use of a special press. The hot transfer process promotes the sublimation of the inks, which are fixed to the fibres of the fabric.

However, the printing methods according to the known art, more specifically the printing supports according to the known art, pose some drawbacks, in some cases such drawbacks that limit their use considerably.

A drawback posed by the known technique is related to the fact that high temperatures and/or long transfer times force the customer to change the settings of the press, which results in an unavoidable increase in the processing times. Another drawback of the known technique is related to the fact that sometimes the object/fabric that must be decorated is damaged as a consequence of the heat treatment, more specifically due to the high temperature to which it is subjected. Another drawback is related to the fact that the portion of the object/fabric occupied by the decoration becomes more rigid than the other portions of the object and this rigidity is perceived as a nuisance by the users of the object, especially in the case of fabrics used for valuable clothing items.

A further drawback is related to the fact that in some cases, for example when sublimation papers are used, the object to be processed must be made of a polyester fabric, thus limiting the range of objects to which said printing technique can be applied.

Further drawbacks and/or inconveniences of the printing supports known in the art are related to their production methods, which in some cases are very complicated.

Finally, also as a consequence of the necessary printing temperatures and/or times, the printing process considerably affects the production cost of the final objects.

Thus, it is one object of the present invention to eliminate the drawbacks mentioned above and observed in the printing supports known in the art.

More specifically, the purposes and objects of the present invention can be summed up as follows.

It is a first object of the invention to provide a solution that can be used for making printing supports which, when applied according to the known techniques for application to objects, for example clothing items and/or accessories, do not alter the intrinsic characteristics of the same objects, more specifically do not make the objects become so rigid and/or hard that they represent a nuisance for the users.

It is a further object of the invention to provide a printing support that makes it possible to print objects while at the same time reducing the amount of damage to which they are subjected compared to the known techniques.

It is a further object of the present invention to provide a printing support that makes it possible to print objects of various types, not limited, for example, to polyester fabrics.

In addition to the above, it is a further object of the invention to provide a solution that makes it possible to reduce the production times and/or costs of objects printed using sublimation inks, and also to provide a less expensive support.

It is a further object of the present invention to provide a solution that makes it possible to obtain objects, more specifically printed fabrics, that are resistant to washing cycles at higher temperatures compared to the objects obtained with the known technique.

Printing supports are known in the prior art from documents EP 1 710 077 A1, JP 2005 199480 A, US 2004/100546 A1, WO 00/73570 A1, WO 02/085614 A1, US 6 638 604 B1 and WO 2007/118083 A2.

### DESCRIPTION OF THE PRESENT INVENTION

The present invention is based on the general consideration according to which the drawbacks observed in the printing supports carried out according to the known technique can be effectively overcome or at least minimized by conveniently choosing the material and the techniques for making the layer intended to receive the inks through the use of polyester powders comprising polyethylene terephthalate (PET) powder in said receptive layer.

According to a first aspect of the present invention, therefore, the subject of the same is a stratified support item for printing a surface with sublimation inks, more specifically for printing a surface of clothing items, such as T-shirts, sweatshirts or the like, said item comprising a thermo adhesive layer suited to allow said item to be fixed to said surface and at least one finish layer suited to receive said sublimation inks, wherein said finish layer comprises polyester powder comprising polyethylene terephthalate (PET) powder incorporated in a matrix made of a polymeric material.

In a preferred embodiment, the matrix made of a polymeric material comprises polymers of polyurethane and/or acrylic resin and/or vinyl resin.

According to a preferred embodiment, said polyester powder is present in a weight percentage included between 20% and 80% with respect to said matrix made of a polymeric material, more preferably between 40% and 70%.

In a preferred embodiment, the item comprises a support layer positioned in contact with the thermo adhesive layer.

Preferably, the thermo adhesive layer comprises a thermoplastic layer, preferably a copolyester resin-based or polyurethane-based thermoplastic layer.

According to a preferred embodiment, the item furthermore comprises an intermediate skin layer in contact with said thermo adhesive layer and said finish layer.

Preferably, the second intermediate skin layer comprises polyurethane-based materials, preferably PU, or acrylic-based materials, or PVC, or LDPE. Preferably, said polyester powder and/or polyamide powder features a grain size of less than 500 micrometres, more preferably of less than 200 micrometres, even more preferably of less than 75 micrometres.

In a preferred embodiment, the grains of the polyester powder have the shape of polyhedra.

According to a preferred embodiment, the polyester powder is obtained through a grinding and micronization process in a cryogenic process.

According to another aspect of the present invention, the subject of the same is a method for producing an item according to the description provided above, wherein the method comprises a step in which said at least one finish layer and said thermo adhesive layer are mutually coupled with each other, wherein said at least one finish layer is obtained starting from an amalgam comprising polyester powder comprising polyethylene terephthalate (PET) powder incorporated in a matrix made of a polymeric material.

In a preferred embodiment, said mutual coupling is obtained by spreading said at least one finish layer on the thermo adhesive layer.

Preferably, the finish layer is spread directly on the thermo adhesive layer. According to a preferred embodiment, the method comprises a step of production of the intermediate skin layer which is formed by spreading an amalgam comprising polyurethane-based material on the thermo adhesive layer. Preferably, said at least one finish layer is spread on the intermediate skin layer. In a preferred embodiment, the thermo adhesive layer belongs to a preparation comprising also a coating support, said thermo adhesive layer being pre-coupled to the coating support.

Preferably, the coating support comprises a paper film, preferably a siliconised paper film.

According to a preferred embodiment, the method comprises the removal of the coating support after the formation of said at least one finish layer.

In a preferred embodiment, the combination of the thermo adhesive layer with the finish layer/s or the combination of the thermo adhesive layer with the finish layer/s and the intermediate layer is arranged on a support layer, placing the thermo adhesive layer in contact with the support layer.

Preferably, the support layer comprises a polyester-based material.

According to a preferred embodiment, the method comprises the printing of the most external layer of said at least one finish layer with sublimation inks. Preferably, according to the method of the invention, said polyester powder features a grain size of less than 500 micrometres, more preferably of less than 200 micrometres, even more preferably of less than 75 micrometres.

In a preferred embodiment, according to the method of the invention, the grains of the polyester powder have the shape of polyhedra. According to a further aspect of the present invention, the subject of the same is an object comprising a decorated surface, wherein the decoration of said decorated surface is obtained by applying an item as described above to said surface.

Preferably, said object comprises a fabric of a clothing item.

### BRIEF DESCRIPTION OF THE FIGURES

The present invention will be clarified in the following description of a preferred embodiment, which is illustrated in the attached drawings. It should however be noticed that the present invention is not limited to the embodiment illustrated in the drawings. In particular, in the attached drawings:
- Figure 1 shows a diagram illustrating the steps of the formation process of a support item according to a preferred embodiment of the present invention;
- Figure 2 shows an axonometric view of an item obtained by means of the process illustrated in Figure 1;
- Figure 3 shows a sectional view of a semi-finished product obtained in an intermediate step of the process illustrated in Figure 1;
- Figure 4 shows a sectional view of the support item of Figure 2 obtained by means of the process illustrated in Figure 1;
- Figure 5 shows the step of printing the support item of the invention;
- Figures from 6 to 8 show the finishing steps in which the support item of the invention is used;
- Figure 9 shows a step of application of the support item to a clothing item;
- Figure 10 shows an object obtained by means of the support item carried out according to the present invention.

### DETAILED DESCRIPTION OF SOME EMBODIMENTS OF THE PRESENT INVENTION

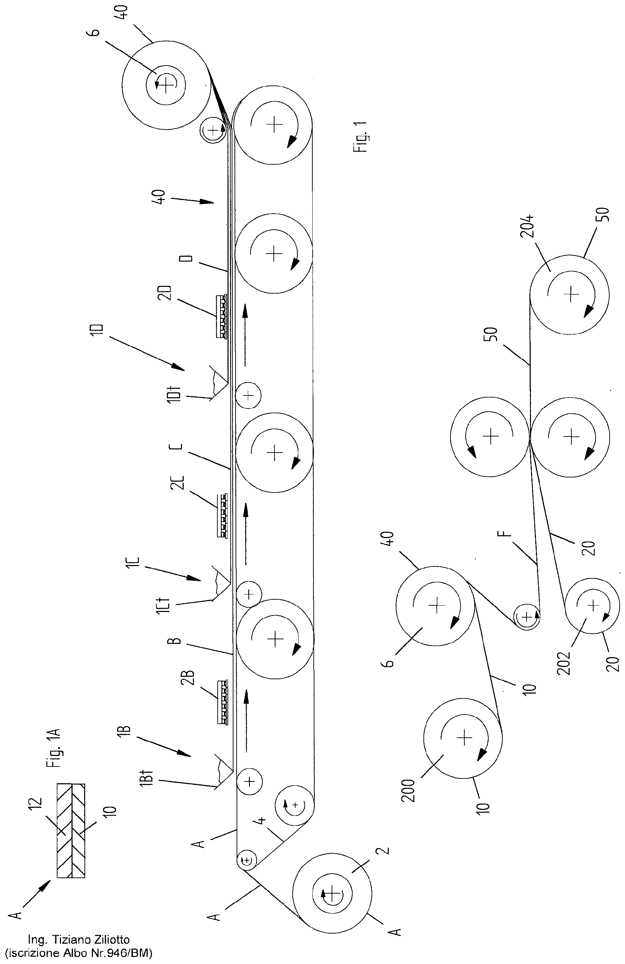

Figure 1 shows a system 1 suited to produce a stratified item 50 according to a preferred embodiment of the invention and according to a preferred embodiment of the method of the invention.

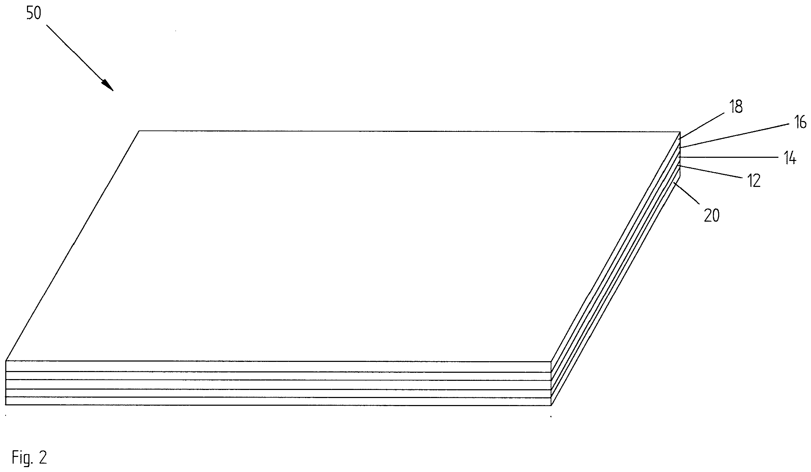

The item 50 according to the preferred embodiment, obtained by means of said system 1, is shown, in particular, in Figure 2. There, the item 50 is substantially represented in the form of a sheet, for example an A4 size sheet.

However, the item which is the subject of the present invention can have any other desired shape and/or can be wound on a coil, in the form of a film ready to be cut to size.

It should also be observed that, in order to facilitate the present description, in the figures the thicknesses of the various layers are merely indicative, and so are the proportions of the same with respect to one another.

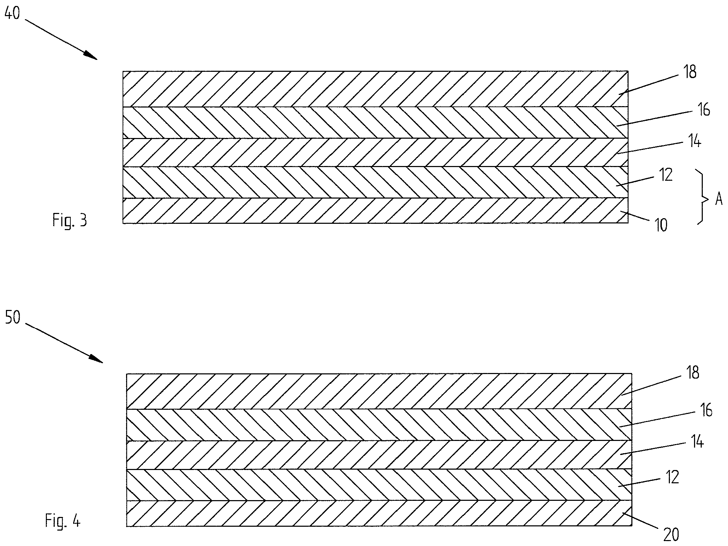

In Figure 1 the reference numeral 2 identifies a first coil on which a preparation is wound which is indicated as a whole by A and shown in the detailed view of Figure 1A and in Figure 3.

The preparation A preferably comprises a coating support 10 and a thermo adhesive layer 12.

The coating support 10 serves the function of enabling the successive processing steps to be carried out in the system 1, which is provided with coating stations, as described below. In a successive step of the method, therefore, said coating support 10 will be removed in order to be eliminated or recovered and successively re-used.

Preferably, the coating support 10 comprises a paper film, more preferably a siliconised paper film.

For example, the coating support 10 has a thickness of 140 micrometers.

In variant embodiments, said coating support may comprise different materials, for example a film in polyethylene terephthalate (PET) and/or polypropylene (PP) or in general any material suited to be used in a coating process.

The thermo adhesive layer 12 is preferably pre-coupled with the coating support, preferably in a special unit located upstream of the system 1.

Preferably, the thermo adhesive layer 12 comprises a thermoplastic layer, preferably a copolyester resin-based or polyurethane-based thermoplastic layer, which essentially has the function of allowing the item 50 to be applied through adhesion to fabrics or clothing items in general (as is described below). The thermo adhesive layer 12, for example, has a thickness of 55 micrometers.

In variant embodiments, the thermo adhesive layer may comprise different materials, such as TPU, LDPE, acrylic, PA, PU, silicone, rubber, etc.

While in the embodiment illustrated herein the preparation A is pre-coupled and feeds the system 1, in a variant embodiment the preparation A may be made in a special unit of the system 1 itself, for example through a coating station that applies the thermo adhesive layer to a suitable coating support.

The system 1 preferably comprises a conveyor belt 4, through which the preparation A is unwound from the first coil 2 and made advance in the direction of advance indicated by the arrow, that is, from left to right in Figure 1.

Three coating stations 1B, 1C, 1D are installed in succession along the belt 4 for the formation of superimposed layers respectively indicated by the reference numerals 14, 16 and 18.

More specifically, the formation of the layers 14, 16 and 18 takes place as explained below.

With the preparation A advancing from left to right as shown in Figure 1, the first coating station 1B is activated in order to spread an intermediate layer 14, commonly defined also skin layer, on the preparation A.

The skin layer 14 preferably comprises a white material and serves to ensure the opacity of the item 50 and define a white base, so that it can then be used on fabrics in any colour.

The skin layer 14 preferably comprises polyurethane-based materials, preferably PU, or acrylic-based materials, or PVC, or LDPE.

The skin layer 14 preferably comprises also pigments, dye and/or rheologic agents.

Furthermore, the skin layer 14 advantageously serves as a bridge between the thermo adhesive layer 12 and the layers that will be formed on top of it and are described here below. The fact that the skin layer 14 serves the function of a bridge improves the mechanical connection between the thermo adhesive layer 12 and the adjacent layers formed on top of it.

The skin layer 14, for example, has a thickness of 40 micrometers.

According to the invention, however, in the case where it is not desirable to have an opaque base, it will be possible to use a skin layer that is not necessarily white, but can even be transparent, or said layer 14 can even be omitted. In this case, the system may not be equipped with the first coating station 1B. Obviously, the final item will not be provided with a skin layer, either.

The coating station 1B preferably comprises a coating blade 1Bt suited to receive the material that will make up the skin layer 14.

An amalgam of the materials making up the skin layer 14 is spread on the preparation A by means of the coating blade 1Bt.

Depending on the composition of the skin layer 14, the station 1B may comprise further accessories (not represented in the figure) that are suited, for example, to heat the amalgam of the components or even to mix the amalgam, so as to guarantee the desired fluidity.

After leaving the station 1B, the amalgam is heated (dried) by means of an oven 2B, so as to form a continuous layer B.

Two layers 16 and 18, the so-called finish layers, which are suited to receive the sublimation inks, are formed in respective successive coating stations 1C and 1D. In the embodiment illustrated and described herein there are two finish layers 16 and 18. However, in a preferred variant embodiment there can be a single finish layer obtained through a single respective coating station.

In a preferred embodiment, the two layers 16 and 18 have the same, or essentially the same composition and/or thickness.

According to the present invention, the finish layer/s 16, 18 comprises/comprise polyester powder comprising polyethylene terephthalate (PET) powder incorporated in a matrix made of a polymeric material. In a preferred embodiment, the finish layer/layers 16, 18 comprises/comprise both polyester powder and polyamide powder. Polyamide powder is preferably present in a percentage included between 20% and 80% with respect to the polyester powder. In a preferred embodiment, the polyester powder and/or the polyamide powder has/have a grain size of less than 500 micrometres, more preferably a grain size of less than 200 micrometres, even more preferably a grain size of less than 75 micrometres.

In a preferred embodiment, the grains of the polyester powder and/or polyamide powder have the shape of polyhedra.

Preferably, the matrix made of a polymeric material comprises polymers of polyurethane and/or acrylic resin and/or vinyl resins, or mixtures of the same.

Preferably the polyester powder comprising polyethylene terephthalate powder (PET) is present in a weight percentage included between 20% and 80% with respect to said matrix made of a polymeric material, more preferably between 40% and 70%.

For example, the finish layers 16, 18 have an overall thickness included between 70 and 90 micrometres (for example a thickness included between 35 and 45 micrometres for each finish layer 16, 18).

The coating stations 1C and 1D preferably comprise respective coating blades 1Ct and 1Dt suited to receive the material that will make up the finish layers 16 and 18.

An amalgam of the materials making up the first finish layer 16 is spread on the previous continuous layer B by means of the coating blade 1Ct, in such a way as to form the first finish layer 16.

Depending on the composition of the first finish layer 16, the station 1C may comprise further accessories (not represented in the figure) that are suited, for example, to heat the amalgam of the components or even to mix the amalgam, so as to guarantee the desired fluidity.

After leaving the station 1C, the amalgam is heated (dried) by means of an oven 2C so as to form a continuous layer C.

An amalgam of the materials making up the second finish layer 18, that is, the most external layer, is spread on the previous continuous layer C by means of the successive coating blade 1Dt, in such a way as to form the second finish layer 18. Depending on the composition of the second finish layer 18, the station 1D may comprise further accessories (not represented in the figure) that are suited, for example, to heat the amalgam of the components or even to mix the amalgam, so as to guarantee the desired fluidity.

After leaving the station ID, the amalgam is heated (dried) by means of an oven 2D so as to form a continuous layer D.

In a preferred embodiment, the amalgam of which the first and/or the second finish layer/s 16, 18 is/are made is obtained by mixing polyester powders comprising polyethylene terephthalate (PET) powder dispersed in a solvent, for example dimethylformamide solvent (DMF) and methoxypropanol solvent (MP), and incorporated in the matrix made of a polymeric material, preferably acrylic resin pre-dispersed in ethyl acetate.

The coating process of the finish layers 16 and 18 preferably includes the application of a quantity of material respectively equal to 45 g/m² and 45 g/m² in dry conditions.

The product D leaving the station 1D constitutes a semi-finished stratified product 40, represented in particular in Figure 3. The semi-finished stratified product 40 is preferably wound on a special coil 6.

The coating support 10 is removed from the semi-finished stratified product, preferably from the coil 6 on which it was wound. The coating support 10 is preferably wound on a special coil 200 and recovered in order to be successively re-used. Alternatively, the coating support 10 can be recycled or even discarded. In a successive step, a new support layer 20 is applied to the semi-finished stratified product 40 without the coating support 10, in order to obtain the final item 50, as shown in Figure 4.

In a preferred embodiment, as shown in Figure 1, the support layer 20 is applied after being unwound from a special coil 202.

Preferably, the final item 50 is wound on a special coil 204, too, and it is ready to be successively used and/or cut to size, for example in A4 sheets.

Preferably, the support layer 20 comprises a polyester-based material.

In variant embodiments the support layer may comprise different materials, such as paper, polypropylene (PP), etc.

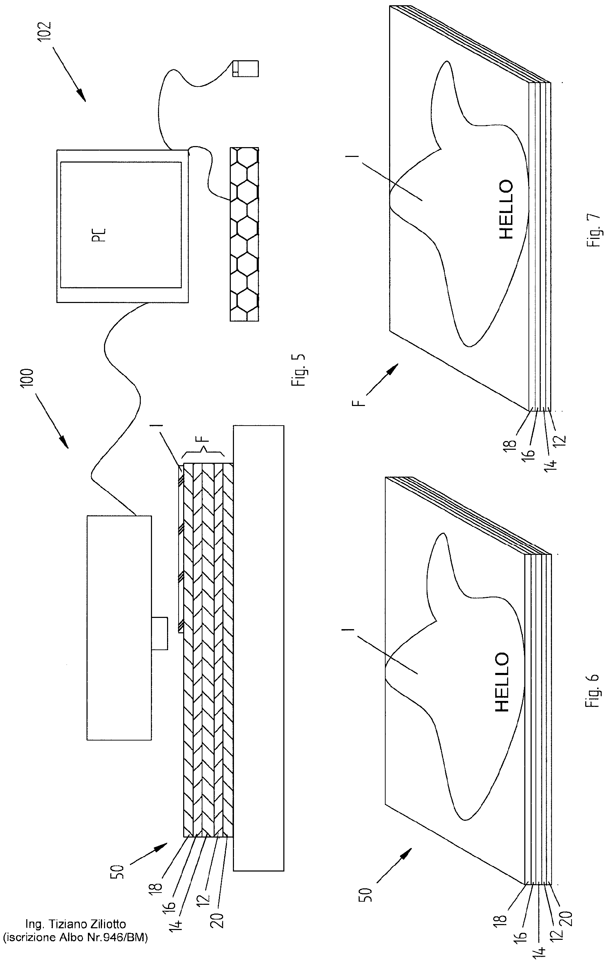

The support layer 20 has the function of facilitating the printing operations to be carried out on the item 50, more specifically on the external finish layer 18, for example of facilitating the insertion and the removal of the item 50 into and from a printer for sublimation inks (Figure 5).

To sum up, the item 50 comprises a stratified structure in which the layers have the following characteristics:
- the support layer 20 preferably comprises a polyester-based material, having preferably the function of enabling the item 50 to be used in printers for sublimation inks;
- the overlying layer 12 comprises a thermo adhesive film, preferably a copolyester resin-based or polyurethane resin-based thermo adhesive film, essentially having the function of allowing application through adhesion to fabrics or clothing items in general (see the description below);

- the overlying layer 14 constitutes a so-called skin layer having the function of making the item 50 opaque during printing on fabrics in any colour and of giving substance and strength to the material, improving its mechanical characteristics;
- the finish layers 16, 18, more specifically the external finish layer 18, have the purpose of receiving and holding the sublimation inks, guaranteeing good print resolution and making the material pleasant to the touch, in addition to maintaining its main characteristics.

The item 50 made as described above is suited to be printed, for example as shown in Figure 5, using a printer 100, for example managed by a computer 102, wherein during the printing process a decoration, for example the word "HELLO" shown in Figure 6, is transferred on the external finish layer 18 by applying inks I.

During a successive step, the item 50 with the print on it can possibly be trimmed, preferably with the aid of a cutting plotter, in order to obtain an item with the desired contours.

The support layer 20 is then removed from the item 50 with the print on it, as shown in Figure 7, thus obtaining an item F ready to be applied, for example, to a fabric or clothing item M.

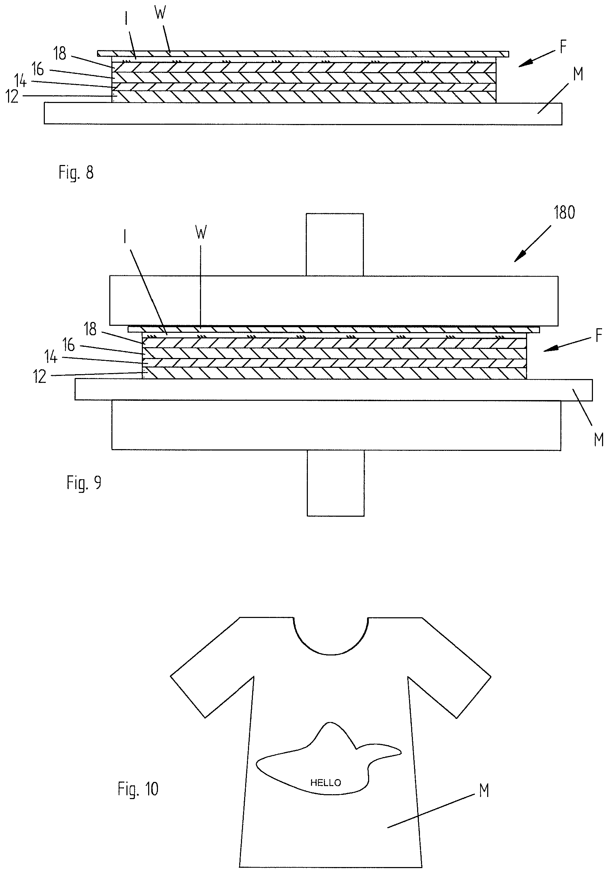

The application of the item F to a clothing item (T-shirt) M is schematically represented in Figures 8 and 9 and comprises a first step (Figure 8) in which the item F (with the inks I applied to the finish layer 18) is arranged at the level of the desired portion of the clothing item M. This last operation is carried out with the aid of an adhesive support W, preferably in a silicone-based or acrylic-based or rubber-based material, which raises the item F and makes it easier to position it on the fabric M.

In a successive step (Figure 9) the item F is fixed to the clothing item M through the application of heat and pressure in a special press 180.

More specifically, during this last step, the thermo adhesive layer 12 is softened/melted and transferred (at least partially) onto the clothing item M, thus impregnating it, wherein, then, the subsequent cooling and hardening of the item (of the previously softened/melted layer) results in the definitive fixing of the same to the clothing item M. It should also be noted that the application of heat leads to the further result of fixing the sublimation inks to the external finish layer 18 and to the first finish layer 16. In this way the inks acquire resistance, specifically to washing, even at high temperatures, as well as brightness and colour.

According to an advantageous aspect of the present invention, thanks to the particular composition of the finish layers 16, 18, and especially to the presence of the grains that make up the polyester powder comprising polyethylene terephthalate (PET) powder with respective reduced softening/melting temperatures, makes it possible to entrap the inks at lower application temperatures compared to the known techniques, protecting also the most delicate fabrics.

The item 50 carried out according to the present invention, in fact, makes it possible to obtain the results described above (softening/melting and transfer of the thermo adhesive layer 12 and activation of the inks I) at considerably lower temperatures than those required for the items made according to the known technique.

Preferably, the operating temperatures of the press 180 can lie within a range included between 150°C and 200°C. For example, the pressing step can take place at a temperature within that range for a period of time of approximately 15 seconds at a pressure of 3 bars).

Once the press 180 has been opened, the adhesive support W is removed.

The reduced temperatures obviously have a lower impact on the fabric or clothing item, which is subject to lower thermal stress, with considerable advantages in the case of clothing items in cotton, wool or similar materials.

The result is thus that represented in Figure 10, that is, a clothing item M decorated with the item 50.

According to a further advantageous aspect of the present invention, thanks to the particular composition of the finish layers 16, 18, and more specifically to the presence of the polyester powder comprising polyethylene terephthalate (PET) powder, the item 50 has a good elasticity, which makes it easy to process in the cutting steps, especially favouring the use of a cutting plotter and avoiding manual trimming operations. According to another advantageous aspect of the present invention, thanks to the particular composition of the finish layers 16, 18, and more specifically to the presence of the polyester powder comprising polyethylene terephthalate (PET) powder, the item 50 can be used for printing objects made of any material.

It has thus been shown, by means of the preceding detailed description of the embodiment of the present invention illustrated in the drawings, that the present invention makes it possible to achieve the desired results while at the same time minimizing the drawbacks observed in the known technique.

It should also be noted that, even if the present invention has been illustrated by means of the preceding detailed description of its embodiment represented in the drawings, the present invention is not limited to the embodiment described above and represented in the drawings. On the contrary, all the variants and modifications of the embodiment described and represented herein which are clear and obvious for the expert in the art fall within the scope of the present invention. For example, as already mentioned above, the skin layer can be omitted, according to the needs and/or circumstances. Furthermore, also the thickness of each one of the layers can be selected according to the needs and/or circumstances. Again, the system can have different characteristics. For example, the invention may comprise alternative coating stations to the one illustrated and described above, for example coating stations for reverse roller coating, synchro roller coating, or coating with photo-engraved cylinder. Other techniques may consist in the "deposition" of the polyester powder and/or the polyamide powder on the polymeric matrix or in a mixture spraying technique.

Furthermore, it should be specified that the system and the execution method illustrated and described above represent a preferred embodiment for the execution of the item according to the present invention. In variant embodiments, however, the layers of the item can be made and coupled together using systems and corresponding methods different from those described herein. Therefore, the execution of the succession of layers of the item and their mutual coupling can be different from those previously described above. For example, the finish layers may be the first to be made, for example through a coating process on a special coating layer, and this step may be followed by the coupling of a thermo adhesive layer, for example through a coating and/or thermal coupling process.

The scope of the present invention is defined in the claims.

## Claims

1. Stratified support item (50) for printing a surface (M) with sublimation inks (I), more specifically for printing a surface of clothing items (M) such as T-shirts, sweatshirts or the like, said item (50) comprising a thermo adhesive layer (12) suited to allow said item (50) to be fixed to said surface (M) and at least one finish layer (16, 18) suited to receive said sublimation inks (I), wherein said finish layer (16, 18) comprises polyester powder incorporated in a matrix of polymeric material,
**characterized in that** said powder comprises polyethylene terephthalate powder (PET).

2. Item (50) according claim 1, **characterized in that** said matrix of polymeric material comprises polyurethane and/or acrylic resin and/or vinyl resin polymers.

3. Item (50) according to any of the preceding claims, **characterized in that** said polyester powder is present in a weight percentage included between 20% and 80% with respect to said matrix in a polymeric material, more preferably between 40% and 70%.

4. Item (50) according to any of the preceding claims, **characterized in that** it comprises a support layer (20) positioned in contact with said thermo adhesive layer (12).

5. Item (50) according to any of the preceding claims, **characterized in that** said thermo adhesive layer (12) comprises a thermoplastic layer, preferably a copolyester resin-based or polyurethane resin-based thermoplastic layer.

6. Item (50) according to any of the preceding claims, **characterized in that** it furthermore comprises an intermediate skin layer (14) in contact with said thermo adhesive layer (12) and said finish layer (16, 18).

7. Item (50) according to claim 6, **characterized in that** said second intermediate skin layer (14) comprises polyurethane-based materials, preferably PU, or acrylic materials, or PVC, or LDPE.

8. Item (50) according to any of the preceding claims, **characterized in that** said polyester powder features a grain size of less than 500 micrometres, more preferably of less than 200 micrometres, even more preferably of less than 75 micrometres.

9. Item (50) according to any of the preceding claims, **characterized in that** the grains of said polyester powder have the shape of polyhedra.

10. Method for producing an item (50) according to any of the preceding claims, comprising the step of mutually combining said at least one finish layer (16, 18) and said thermo adhesive layer (12), **wherein** said at least one finish layer (16, 18) is obtained starting from an amalgam comprising polyester powder incorporated in a matrix of polymeric material,
**characterized in that** said powder comprises polyethylene terephthalate powder (PET).

11. Method according to claim 10, **characterized in that** said mutual coupling is obtained by spreading said at least one finish layer (16, 18) on said thermo adhesive layer (12).

12. Method according to claim 11, **characterized in that** said finish layer (16, 18) is spread directly on said thermo adhesive layer (12).

13. Method according to claim 10, **characterized in that** it comprises a step of production of said intermediate skin layer (14) which is formed by spreading an amalgam comprising polyurethane-based material on said thermo adhesive layer (12).

14. Method according to claim 13, **characterized in that** said at least one finish layer (16, 18) is spread on said intermediate skin layer (14).

15. Method according to any of the claims from 10 to 14, **characterized in that** said thermo adhesive layer (12) is part of a preparation (A) comprising also a coating support (10), said thermo adhesive layer (12) being pre-coupled with said coating support (10).

16. Method according to claim 15, **characterized in that** said coating support (10) comprises a paper film, preferably a siliconised paper film.

17. Method according to claim 15 or 16, **characterized in that** it comprises the removal of said coating support (10) after the formation of said at least one finish layer (16, 18).

18. Method according to any of the claims from 10 to 17, **characterized in that** the combination of the thermo adhesive layer (12) with the finish layer (16, 18) or the combination of the thermo adhesive layer (12) with the finish layer (16, 18) and the intermediate layer (14) is arranged on a support layer (20) placing the thermo adhesive layer (12) in contact with said support layer (20).

19. Method according to any of the claims from 10 to 18, **characterized in that** it comprises the step of printing the most external layer (18) of said at least one finish layer (16, 18) with sublimation inks (I).

20. Method according to any of the claims from 10 to 19, **characterized in that** said polyester powder features a grain size of less than 500 micrometres, more preferably of less than 200 micrometres, even more preferably of less than 75 micrometres.

21. Method according to any of the claims from 10 to 19, **characterized in that** the grains of said polyester powder have the shape of polyhedra.

22. Object comprising a decorated surface, **wherein** the decoration of said decorated surface is carried out through the application of an item (50) according to any of the claims from 1 to 9 to said surface.

## Patentansprüche

1. Mehrlagiges Trägerelement (50) zum Bedrucken einer Oberfläche (M) mit Sublimationstinten (I), genauer zum Bedrucken einer Oberfläche auf Kleidungsstücken (M) wie T-Shirts, Sweatshirts oder dergleichen, wobei das Element (50) eine thermoklebende Schicht (12) umfasst, die dazu geeignet ist, das besagte Element (50) an der besagten Oberfläche (M) zu fixieren, und wenigstens eine Deckschicht (16, 18), die dazu geeignet ist, die besagten Sublimationstinten (I) aufzunehmen, wobei die besagte Deckschicht (16, 18) Polyesterpulver umfasst, das in einer Matrize aus polymerischem Material integriert ist,
**dadurch gekennzeichnet, dass** das besagte Pulver Polyethylenterephthalatpulver (PET) umfasst.

2. Element (50) nach Patentanspruch 1, **dadurch gekennzeichnet, dass** die besagte Matrize aus polymerischem Material Polyurethan- und/oder Acrylharz- und/oder Vinylharzpolymere umfasst.

3. Element (50) nach einem jeden der vorstehenden Patentansprüche, **dadurch gekennzeichnet, dass** das besagte Polyesterpulver in einem prozentualen Gewichtsanteil zwischen 20 % und 80 % und vorzugsweise zwischen 40 % und 70 % bezüglich der besagten Matrize aus polymerischem Material enthalten ist.

4. Element (50) nach einem jeden der vorstehenden Patentansprüche, **dadurch gekennzeichnet, dass** es eine Trägerschicht (20) umfasst, die in Kontakt mit der besagten thermoklebenden Schicht (12) positioniert ist.

5. Element (50) nach einem jeden der vorstehenden Patentansprüche, **dadurch gekennzeichnet, dass** die besagte thermoklebende Schicht (12) eine thermoplastische Schicht, vorzugsweise eine copolyesterharzbasierte oder polyurethanharzbasierte, thermoplastische Schicht umfasst.

6. Element (50) nach einem jeden der vorstehenden Patentansprüche, **dadurch gekennzeichnet, dass** es des Weiteren eine dünne Zwischenschicht (14) umfasst, die mit der besagten thermoklebenden Schicht (12) und der besagten Deckschicht (16, 18) in Kontakt ist.

7. Element (50) nach Patentanspruch 6, **dadurch gekennzeichnet, dass** die besagte zweite, dünne Zwischenschicht (14) polyurethanbasierte Materialien, vorzugsweise PU, oder acrylische Materialien oder PVC oder LDPE umfasst.

8. Element (50) nach einem jeden der vorstehenden Patentansprüche, **dadurch gekennzeichnet, dass** das besagte Polyesterpulver eine Körnung von weniger als 500 Mikrometern aufweist, vorzugsweise von weniger als 200 Mikrometern, und besonders bevorzugt von weniger als 75 Mikrometern.

9. Element (50) nach einem jeden der vorstehenden Patentansprüche, **dadurch gekennzeichnet, dass** die Körner des besagten Polyesterpulvers polyederförmig sind.

10. Verfahren zur Herstellung eines Elements (50) nach einem jeden der vorstehenden Patentansprüche, den Schritt der wechselseitigen Verbindung der besagten, wenigstens einen Deckschicht (16, 18) und der besagten thermoklebenden Schicht (12) umfassend, **wobei** die besagte wenigstens eine Deckschicht (16, 18) von einem Amalgam ausgehend gewonnen wird, das in einer Matrize aus polymerischem Material integriertes Polyesterpulver umfasst, **dadurch gekennzeichnet, dass** das besagte Pulver Polyethylenterephthalatpulver (PET) umfasst.

11. Verfahren nach Patentanspruch 10, **dadurch gekennzeichnet, dass** die besagte wechselseitige Verbindung erzielt wird, indem die besagte, wenigstens eine Deckschicht (16, 18) auf die besagte thermoklebende Schicht (12) aufgebracht wird.

12. Verfahren nach Patentanspruch 11, **dadurch gekennzeichnet, dass** die besagte Deckschicht (16, 18) direkt auf die besagte thermoklebende Schicht (12) aufgebracht wird.

13. Verfahren nach Patentanspruch 10, **dadurch gekennzeichnet, dass** es einen Schritt der Herstellung der besagten dünnen Zwischenschicht (14) umfasst, welche durch Aufbringen eines polyurethanbasiertes Material umfassenden Amalgams auf die besagte thermoklebende Schicht (12) gebildet wird.

14. Verfahren nach Patentanspruch 13, **dadurch gekennzeichnet, dass** die besagte wenigstens eine Deckschicht (16, 18) auf die besagte dünne Zwischenschicht (14) aufgebracht wird.

15. Verfahren nach einem jeden der Patentansprüche von 10 bis 14, **dadurch gekennzeichnet, dass** die besagte thermoklebende Schicht (12) Teil einer Zubereitung (A) ist, die auch einen Beschichtungsträger (10) umfasst, wobei die besagte thermoklebende Schicht (12) mit dem besagten Beschichtungsträger (10) vorverbunden ist.

16. Verfahren nach Patentanspruch 15, **dadurch gekennzeichnet, dass** der besagte Beschichtungsträger (10) einen Papierfilm umfasst, vorzugsweise einen silikonisierten Papierfilm.

17. Verfahren nach Patentanspruch 15 oder 16, **dadurch gekennzeichnet, dass** es nach der Bildung der besagten wenigstens einen Deckschicht (16, 18) die Entfernung des besagten Beschichtungsträgers (10) umfasst.

18. Verfahren nach einem jeden der Patentansprüche von 10 bis 17, **dadurch gekennzeichnet, dass** die Kombination der thermoklebenden Schicht (12) mit der Deckschicht (16, 18) oder die Kombination der thermoklebenden Schicht (12) mit der Deckschicht (16, 18) und der Zwischenschicht (14) auf einer Trägerschicht (20) angeordnet ist, wobei die thermoklebende Schicht (12) in Kontakt mit der besagten Trägerschicht (20) positioniert wird.

19. Verfahren nach einem jeden der Patentansprüche von 10 bis 18, **dadurch gekennzeichnet, dass** es den Schritt des Druckens der äußersten Schicht (18) der besagten wenigstens einen Deckschicht (16, 18) mit Sublimationstinten (I) umfasst.

20. Verfahren nach einem jeden der Patentansprüche von 10 bis 19, **dadurch gekennzeichnet, dass** das besagte Polyesterpulver eine Körnung von weniger als 500 Mikrometern aufweist, vorzugsweise von weniger als 200 Mikrometern, und besonders bevorzugt von weniger als 75 Mikrometern.

21. Verfahren nach einem jeden der Patentansprüche von 10 bis 19, **dadurch gekennzeichnet, dass** die Körner des besagten Polyesterpulvers polyederförmig sind.

22. Eine dekorierte Oberfläche umfassender Gegenstand, **wobei** die Dekoration der besagten dekorierten Oberfläche durch Anbringung eines Elements (50) nach einem jeglichen der Patentansprüche von 1 bis 9 auf die besagte Oberfläche ausgeführt wird.

## Revendications

1. Élément d'appui stratifié (50) pour l'impression d'une surface (M) avec des encres à sublimation (I), plus spécifiquement pour l'impression d'une surface d'articles vestimentaires (M) tels que T-shirts, sweatshirts ou similaire, ledit élément (50) comprenant une couche thermoadhésive (12) indiquée pour permettre que ledit élément (50) soit fixé à ladite surface (M) et au moins une couche de finition (16, 18) indiquée pour recevoir lesdites encres à sublimation (I), où ladite couche de finition (16, 18) comprend poudre polyester intégrée dans une matrice en matériau polymérique, **caractérisé en ce que** ladite poudre comprend poudre de polyéthylène téréphtalate (PET).

2. Élément (50) selon la revendication 1, **caractérisé en ce que** ladite matrice en matériau polymérique comprend des polymères de polyuréthane et/ou polymères de résine acrylique et/ou des polymères de résine vinylique.

3. Élément (50) selon l'une quelconque des revendications précédentes, **caractérisé en ce que** ladite poudre polyester est présente en un pourcentage en poids compris entre 20 % et 80 % par rapport à ladite matrice en matériau polymérique, plus préférablement entre 40 % et 70 %.

4. Élément (50) selon l'une quelconque des revendications précédentes, **caractérisé en ce qu'**il comprend une couche de support (20) positionnée en contact avec ladite couche thermoadhésive (12).

5. Élément (50) selon l'une quelconque des revendications précédentes, **caractérisé en ce que** ladite couche thermoadhésive (12) comprend une couche thermoplastique, préférablement une couche thermoplastique à base de résine copolyester ou à base de résine polyuréthane.

6. Élément (50) selon l'une quelconque des revendications précédentes, **caractérisé en ce qu'**il comprend également une couche intermédiaire mince (14) en contact avec ladite couche thermoadhésive (12) et ladite couche de finition (16, 18).

7. Élément (50) selon la revendication 6, **caractérisé en ce que** ladite deuxième couche intermédiaire mince (14) comprend des matériaux à base de polyuréthane, préférablement PU, ou matériaux acryliques, ou PVC, ou LDPE.

8. Élément (50) selon l'une quelconque des revendications précédentes, **caractérisé en ce que** ladite poudre polyester présente une taille des grains inférieure à 500 micromètres, plus préférablement inférieure à 200 micromètres, encore plus préférablement inférieure à 75 micromètres.

9. Élément (50) selon l'une quelconque des revendications précédentes, **caractérisé en ce que** les grains de ladite poudre polyester présentent la forme de polyèdres.

10. Méthode pour la production d'un élément (50) selon l'une quelconque des revendications précédentes,comprenant l'étape de combiner réciproquement ladite au moins une couche de finition (16, 18) et ladite couche thermoadhésive (12), **où** ladite au moins une couche de finition (16, 18) est obtenue à partir d'un amalgame comprenant poudre polyester intégrée dans une matrice de matériau polymérique,
**caractérisée en ce que** ladite poudre comprend poudre de polyéthylène téréphtalate (PET).

11. Méthode selon la revendication 10, **caractérisée en ce que** ledit accouplement mutuel est obtenu en étalant ladite au moins une couche de finition (16, 18) sur ladite couche thermoadhésive (12).

12. Méthode selon la revendication 11, **caractérisée en ce que** ladite couche de finition (16, 18) est étalée directement sur ladite couche thermoadhésive (12).

13. Méthode selon la revendication 10, **caractérisée en ce qu'**elle comprend une étape de production de ladite couche intermédiaire mince (14) qui est formée étalant une amalgame comprenant un matériau à base de polyuréthane sur ladite couche thermoadhésive(12).

14. Méthode selon la revendication 13, **caractérisée en ce que** ladite au moins une couche de finition (16, 18) est étalée sur ladite couche intermédiaire mince (14).

15. Méthode selon l'une quelconque des revendications de 10 à 14, **caractérisée en ce que** ladite couche thermoadhésive (12) fait partie d'une préparation (A) comprenant également un support de revêtement (10), ladite couche thermoadhésive (12) étant pré-accouplée avec ledit support de revêtement (10).

16. Méthode selon la revendication 15, **caractérisée en ce que** ledit support de revêtement (10) comprend une pellicule en papier, préférablement une pellicule en papier siliconé.

17. Méthode selon la revendication 15 ou 16, **caractérisée en ce qu'**elle comprend l'enlèvement dudit support de revêtement (10) après la formation de ladite au moins une couche de finition (16, 18).

18. Méthode selon l'une quelconque des revendications de 10 à 17, **caractérisée en ce que** la combinaison de la couche thermoadhésive (12) avec la couche de finition (16, 18) ou la combinaison de la couche thermoadhésive (12) avec la couche de finition (16, 18) et la couche intermédiaire (14) est disposée sur une couche de support (20) mettant la couche thermoadhésive (12) en contact avec ladite couche de support (20).

19. Méthode selon l'une quelconque des revendications de 10 à 18, **caractérisée en ce qu'**elle comprend l'étape d'impression de la couche plus externe (18) de ladite au moins une couche de finition (16, 18) avec des encres de sublimation (I).

20. Méthode selon l'une quelconque des revendications de 10 à 19, **caractérisée en ce que** ladite poudre polyester présente une taille des grains inférieure à 500 micromètres, plus préférablement inférieure à 200 micromètres, encore plus préférablement inférieure à 75 micromètres.

21. Méthode selon l'une quelconque des revendications de 10 à 19, **caractérisée en ce que** les grains de ladite poudre polyester présentent la forme de polyèdres.

22. Objet comprenant une surface décorée, où la décoration de ladite surface décorée est exécutée par l'application, à ladite surface, de l'élément (50) selon l'une quelconque des revendications de 1 à 9.
